# EUROPÄISCHE PATENTSCHRIFT

(11) **EP 3 033 502 B1**
(45) Veröffentlichungstag und Bekanntmachung des Hinweises auf die Patenterteilung: **13.06.2018**
(21) Anmeldenummer: 14744573.8
(22) Anmeldetag: 30.07.2014
(51) Int. Cl.: F01N 3/28

(54) **ABGASBEHANDLUNGSEINHEIT MIT STRÖMUNGSTEILENDEN UND -MISCHENDEN LEITELEMENTEN**
EXHAUST GAS TREATMENT UNIT COMPRISING FLOW DIVIDING AND MIXING GUIDE ELEMENTS
UNITÉ DE TRAITEMENT DES GAZ D'ÉCHAPPEMENT POURVUE D'ÉLÉMENTS CONDUCTEURS À DIVISION ET MÉLANGE D'ÉCOULEMENT

(30) Priorität: 13.08.2013 DE 102013108745
(43) Veröffentlichungstag der Anmeldung: 22.06.2016
(73) Patentinhaber: Continental Automotive GmbH, 30165 Hannover (DE)
(72) Erfinder: JAYAT, François, 53343 Wachtberg (DE)
(86) Internationale Anmeldenummer: PCT/EP2014/066324
(87) Internationale Veröffentlichungsnummer: WO 2015/022187

(56) Entgegenhaltungen:
- EP-A1- 2 143 899
- WO-A1-96/09893
- WO-A1-2010/142647
- DE-A1- 10 235 691
- US-A1- 2003 051 449
- US-A1- 2010 107 612

## Beschreibung

Die Erfindung betrifft eine Abgasbehandlungseinheit für ein Kraftfahrzeug, bevorzugt für die motornahe Anwendung.

Für die steigenden Anforderungen bei der Abgasbehandlung ist es notwendig, auf engem Raum ein möglichst homogenes Abgasgemisch zu erzeugen, so dass eine optimale Behandlung des Abgases erzielt werden kann. Insbesondere für einen SCR-Abgasbehandlungskörper (selektiver katalytischer Reaktor) ist es erforderlich, eine gute Durchmischung von Abgas und zugegebenem Reduktionsmittel, wie insbesondere eine Harnstoff-WasserLösung, über die gesamte (katalytisch wirksame) Querschnittsfläche des SCR-Abgasbehandlungskörpers zu erzielen.

Darüber hinaus ist zu berücksichtigen, dass das im Automobilbau von modernen Verbrennungskraftmaschinen erzeugte Abgas relativ kühl wird und damit für einige Umwandlungsreaktionen der Abgasnachbehandlung eine motornahe Unterbringung der Abgasbehandlungskörper vorteilhaft ist.

Eine bereits bewährte Abgasbehandlungseinheit für den motornahen Einsatz geht beispielsweise aus der WO 2010/142647 hervor. Durch die seitlich überlappende Anordnung der Abgasbehandlungseinheiten kann eine besonders kompakte Abgasbehandlungseinheit erreicht werden.

Im Stand der Technik sind auch verschiedene andere motornahe Konzepte bekannt, die jedoch in Hinblick auf ihre Baugröße, die Homogenität des anströmenden Abgases und/oder die Verteilung der Abgaskomponenten über die Querschnittsflache des Abgasbehandlungskörpers noch verbesserungsfähig erscheinen.

Aus der US 2003/0051449 A1 ist ein Abgasnachbehandlungssystem bekannt, in dem eine Serie von Trägern innerhalb einer Strömungsstrecke angeordnet sind, wobei ungefähr die Hälfte des Abgases durch einen ersten Träger strömt und die andere Hälfte durch einen zweiten Träger strömt, wodurch die Kapazität im Vergleich zu einer parallelen Durchströmung der Träger vergrößert wird.

Die EP 2 143 899 A1 offenbart eine Abgasreinigungsvorrichtung für Dieselmotoren. Die Vorrichtung weist einen Oxidationskatalysator und einen Partikelfilter auf, wobei Strömungseinlass für Abgas zwischen dem Oxidationskatalysator und dem Partikelfilter angeordnet ist, wobei ein Bypass von dem Einströmbereich des Abgases durch den Oxidationskatalysator hin zu einem stromaufwärts gelegenen Teilbereich des Oxidationskatalysators vorgesehen ist.

Hiervon ausgehend liegt der vorliegenden Erfindung die Aufgabe zugrunde, die mit Bezug auf den Stand der Technik bekannten Nachteile zumindest teilweise zu überwinden. Insbesondere soll eine Abgasbehandlungseinheit für ein Kraftfahrzeug angegeben werden, die eine besonders kompakte Baugröße hat und zudem eine gezielte Einstellung der Homogenität des anströmenden Abgases und/oder eine gezielte Verteilung der Abgaskomponenten über die Querschnittsflache des Abgasbehandlungskörpers ermöglicht.

Die Aufgabe wird durch die Merkmale der unabhängigen Ansprüche gelöst. Vorteilhafte Weiterbildungen sind Gegenstand der abhängigen Ansprüche.

Hier wird demnach eine Abgasbehandlungseinheit vorgeschlagen, die zumindest die folgenden Komponenten aufweist:
- eine Zuleitung für Abgas mit einer Eintrittsöffnung und mit einer Austrittsöffnung und einem strömungstechnisch zwischen Eintrittsöffnung und Austrittsöffnung angeordnetem Abgasbehandlungskörper;
- ein Gehäuse, in welches sich die Zuleitung mit der Austrittsöffnung hin- ein erstreckt und welches zumindest um die Zuleitung herum einen Zwischenraum ausbildet;
- einen Auslassraum in dem Gehäuse, welcher seitlich zu der Zuleitung derart angeordnet ist, dass ein nicht geradliniger Strömungsweg von der Austrittsöffnung der Zuleitung zum Auslassraum mit zumindest einer Strömungsumkehr gebildet ist,
wobei weiter eine Leitelemente aufweisende Teilungsvorrichtung zwischen dem Zwischenraum und dem Auslassraum vorgesehen, die derart eingerichtet ist, dass das aus dem Zwischenraum kommende Abgas in zumindest zwei Teilströme unterteilt wird, die zum Auslassraum hin über zumindest zwei mit
der Teilungsvorrichtung gebildete Öffnungen gegenläufig in den Auslassraum leitbar sind.

Die Abgasbehandlungseinheit ist vornehmlich dazu eingerichtet, auf geringem Bauraum eine homogene und über einen gesamten Querschnitt (gleichmäßig) verteilte Abgasmischung zu erreichen. Das Abgas wird dabei über eine Zuleitung für Abgas in einen (seitlich ausgebildeten) Zwischenraum geleitet. Die Zuleitung ist ein separates Bauteil oder ein Abschnitt einer Abgasleitung im Abgasstrang.

Das Gehäuse ist von der Zuleitung derart beabstandet, dass ein (zumindest teilweise umlaufender) Zwischenraum zwischen der Zuleitung und dem Gehäuse ausgebildet ist. Die Zuleitung ist dabei komplett von dem Gehäuse umfasst oder erstreckt sich von außen in das Gehäuse hinein, wobei das Gehäuse in einem Durchtrittsbereich mit der Zuleitung (gasdicht) verbindbar ist. Besonders bevorzugt ist das Gehäuse nur im Bereich des Durchtritts der Zuleitung mit der Zuleitung verbunden und ansonsten von der Zuleitung, die sich in das Gehäuse hinein erstreckt, beabstandet. Der Zwischenraum umfasst bevorzugt im Wesentlichen den gesamten Umfangsbereich zwischen dem Gehäuse und der Zuleitung, mit Ausnahme des Auslassraums.

Weiterhin bildet das Gehäuse (auch) einen Auslassraum, welcher seitlich zu der Zuleitung angeordnet ist. Mit einer "seitlichen" Anordnung ist gemeint, dass der Auslassraum zumindest teilweise von der Zuleitung überdeckt ist bzw. dieser außen im Bereich der Manteloberfläche der Zuleitung positioniert ist. Dabei ist insbesondere realisiert, dass kein geradliniger Strömungsweg von der Austrittsöffnung der Zuleitung zum Auslassraum gebildet ist, sondern zumindest eine (einmalige oder mehrmalige) Strömungsumkehr stattfinden muss, damit das Abgas aus der Zuleitung in den Auslassraum eintreten kann. Zum Beispiel weist die Zuleitung (nach Art eines Rohres) eine im Wesentlichen gerade Erstreckung um eine Achse auf, die der mittleren Strömungsrichtung des Abgases entspricht. Das Gehäuse ist über zumindest einen Teil der Zuleitung nach außen versetzt zu dieser beabstandet und bildet vor der Austrittsöffnung eine Kappe, die ein geradliniges Weiterströmen des Abgases in Strömungsrichtung aus der Zuleitung heraus verhindert. Das Gehäuse bildet nun einen Auslass, welcher seitlich zur Zuleitung ausgerichtet ist, also insbesondere in der Wandung des Gehäuses, die (parallel) zur Zuleitung nach außen versetzt angeordnet ist, und demnach insbesondere nicht in der Kappe. Vor dem Auslass befindet sich der Auslassraum, welcher sich bevorzugt zwischen der Zuleitung und dem Auslass erstreckt.

Der Auslassraum kann von dem Zwischenraum durch die Teilungsvorrichtung abgetrennt sein. Dabei ist nicht gemeint, dass eine gasdichte Trennung vorgesehen ist, sondern eine durch die Teilungsvorrichtung gelenkte Strömung wird in den Auslassraum geleitet, wobei sich der Auslassraum gegenüber eines Auslasses in dem Gehäuse bildet. Der Auslassraum wird also durch die Teilungsvorrichtung begrenzt, wobei die Öffnungen mit ihrer Öffnungsfläche ebenfalls eine (gedachte) Begrenzung des Auslassraums bilden. Das heißt mit anderen Worten insbesondere, dass das Abgas aus der Austrittsöffnung zunächst in den Zwischenraum eintritt, und durch die zumindest eine Strömungsumkehr eine ungerichtete, komplexe, bevorzugt turbulente, Abgasströmung erzeugt wird. Diese Abgasströmung wird durch die Teilungsvorrichtung mittels der Öffnungen gezielt bzw. so in den Auslassraum geleitet, dass diese beim Übergang in zumindest zwei Teilströme unterteilt wird und diese Teilströme gerichtet sind, und zwar (jeweils zwei Teilströme) einander gegenläufig ausgerichtet sind. Dies wird insbesondere dadurch erreicht, dass die Teilungsvorrichtung teilweise den Zwischenraum zwischen dem Gehäuse und der Zuleitung verschließt und in anderen Bereichen eine Öffnung bildet.

Durch die (insbesondere im Querschnitt des Auslassraumes) gegenläufige Einleitung der Teilströme werden diese besonders gut miteinander vermischt, ohne einen großen Mischraum zu benötigen. Hierdurch wird die Baugröße insgesamt stark reduziert und zugleich eine hohe Homogenität des Abgases erreicht. Zudem wird sich das Abgas aufgrund der gegenläufigen Teilströme über den maximal zur Verfügung stehenden durchströmbaren Querschnitt (radial) ausdehnen, so dass der Auslassraum homogen durch das Abgas gefüllt wird. Ebenfalls ist der Rückstau nicht besonders hoch, weil die Teilströme gerichtet und daher wirbelarm und (nahezu) ohne Strömungsschattenzonen in dem Gehäuse bzw. dem Auslassraum vermischt werden.

Das Abgas der vorgeschlagenen Abgasbehandlungseinheit ist in den Teilströmen bevorzugt gegenläufig in einer Richtung, die in dem Mantelvolumen liegt, welches im Zwischenraum zwischen der Zuleitung und dem Gehäuse gebildet wird, beispielsweise in Umfangsrichtung.

Bevorzugt befindet sich in der Zuleitung ein erster Abgasbehandlungskörper, z. B. ein Dieseloxidationskatalysator, aufgrund dessen das Abgas, bevorzugt laminar, in axialer Ausrichtung der Zuleitung in den Zwischenraum eintritt. Hierfür kann ein Wabenkörper eingesetzt werden. Weiterhin mündet bevorzugt eine Dosiereinheit für ein Reduktionsmittel, z. B. eine Harnstoff-Wasser-Lösung oder Ammoniak, in den Zwischenraum und/oder Auslassraum, wobei das Reduktionsmittel gasförmig und/oder tropfenförmig eingegeben wird und sich aufgrund der Strömungsleitung in der hier vorgeschlagenen Abgasbehandlungseinheit homogen mit dem Abgas vermischt.

Eine bevorzugte Ausführungsform sieht eine Dosiereinheit für gasförmiges Ammoniak oder eine Dosiereinheit für eine (zerstäubte) flüssige Reduktionsmittelzugabe vor, wobei letztere Dosiereinheit einen Sprühkegel ausbildet, welcher bei Abgasströmung zumindest bei einer Abgasströmung in Ausstoßrichtung vom Motor zur Umgebung keinen Richtungsanteil hin zum ersten Abgasbehandlungskörper aufweist. In diesem Fall ist der erste Abgasbehandlungskörper vorteilhafterweise ein reiner Dieseloxidationskatalysator.

In einer anderen Ausführungsform wird ein flüssiges (zerstäubtes) Reduktionsmittel zumindest teilweise entgegen der Hauptströmungsrichtung des aus dem ersten Abgasbehandlungskörpers austretenden Abgases zugegeben. Dabei kann das Reduktionsmittel gut verteilt auf die Austrittsöffnung der Zuleitung und damit auf die Austrittsseite des ersten Abgasbehandlungskörpers aufgetragen werden. Im Bereich der Austrittsöffnung weist der erste Abgasbehandlungskörper bevorzugt eine hydrolytische Beschichtung auf, die eine Zersetzung des Reduktionsmittels in Ammoniak und Lösungsmittel unterstützt. Ganz besonders bevorzugt ist der erste Abgasbehandlungskörper in diesem Fall über etwa 10 % seiner Gesamtlänge im an die Austrittsseite angrenzenden Bereich hydrolytisch beschichtet und über den (gesamten) restlichen Bereich mit einem Dieseloxidationskatalysator beschichtet. Bei dieser Ausführungsform ist trotz des geringen zur Verfügung stehenden Mischraums eine Speicherung bzw. eine Pufferung der benötigten Reduktionsmittelmenge möglich und die Dosiereinheit wird insbesondere bei kleineren Abgasmengen geschont.

In beiden Fällen wird das Reduktionsmittel sehr früh, also spätestens unmittelbar in Ausstoßrichtung hinter der Austrittsöffnung des ersten Abgasbehandlungskörpers, zugegeben. So ist die gesamte Strecke zwischen Austrittsöffnung des ersten Abgasbehandlungskörpers und Einlassöffnung des zweiten Abgasbehandlungskörpers zur Vermischung nutzbar.

Gemäß einer weiteren vorteilhaften Ausführungsform der Abgasbehandlungseinheit schließt sich an den Auslassraum eine Einlassöffnung eines zweiten Abgasbehandlungskörpers an.

In diesem bevorzugten Ausführungsbeispiel bildet der Auslassraum die gesamte Mischkammer für das Abgas. Der Auslassraum ist dabei durch die Teilungsvorrichtung derart eingerichtet, dass das Abgas ausreichend durchmischt und homogenisiert ist, um in einem sich mit seiner Einlassöffnung unmittelbar an den Auslassraum anschließenden zweiten Abgasbehandlungskörper behandelt zu werden. In einer besonders bevorzugten Variante bildet das Gehäuse einen Rohrquerschnitt, der parallel, bevorzugt konzentrisch, zum Querschnitt der Zuleitung beabstandet ist, wobei sich die Einlassöffnung des zweiten Abgasbehandlungskörpers direkt ohne Zwischenstück an die Gehäusewand anschließt. Dabei sei darauf hingewiesen, dass die Einlassöffnung den Eingang des Abgasbehandlungskörpers begrenzt und ab dieser Einlassöffnung bereits eine (katalytische) Behandlung des Abgases stattfindet. Zum Beispiel trifft das Abgas direkt angrenzend an den Auslassraum auf einen katalytisch beschichteten Wabenkörper, vorzugsweise aus Metallfolien oder einem Keramikextrudat aufgebaut.

Besonders bevorzugt ist der zweite Abgasbehandlungskörper mit seiner Einlassöffnung schräg bzw. quer zur axialen Ausrichtung des Gehäuses angeordnet, so dass am Übergang zwischen der Einlassöffnung und dem Auslassraum eine Abweichung von dem, z. B. rein kreisförmigen, Querschnitt vorgesehen ist. Hiermit kann eine, bevorzugt planare, Eintrittsöffnung des zweiten Abgasbehandlungskörpers einen gasdichten Anschluss bilden. Der Fokus dieser Ausführungsform liegt dabei darauf, dass keine weiteren Zwischenelemente vorgesehen sind. Der Auslassraum bildet dann zumindest den Endbereich einer Mischkammer, bestehend aus dem Zwischenraum und dem Auslassraum. So kann eine gute Durchmischung erreicht werden, ohne große räumliche Ausdehnung und ohne übermäßigen Gegendruck zu erzeugen. Besonders bevorzugt ist die axiale Erstreckung des Auslassraums, also der Abstand zwischen einer Öffnung und/oder der Mantelfläche der Zuleitung zur Einlassöffnung kleiner als 100 mm [Millimeter], bevorzugt kleiner als 65 mm oder sogar 50 mm. Unter Berücksichtigung der Art der Eindosierung des Reduktionsmittels und/oder der Anordnung der Abgasbehandlungskörper zueinander sollte die axiale Erstreckung auch eine minimale axiale Erstreckung haben, wie beispielsweise 20 mm [Millimeter] oder 35 mm.

Der zweite Abgasbehandlungskörper ist beispielsweise ein SCR-Katalysator (selektive katalytische Reduktion). In Verbindung mit einer Reduktionsmitteleingabe im Zwischenraum und/oder Auslassraum wird hier eine besonders homogene Verteilung des Reduktionsmittels im Abgas und maximale radiale Verbreitung des Gemischs vor dem Eintreten des Abgases in die Eintrittsfläche des zweiten Abgasbehandlungskörpers erreicht.

Gemäß einer weiteren vorteilhaften Ausführungsform der Abgasbehandlungseinheit weist die Teilungsvorrichtung zumindest ein erstes Leitelement und ein zweites Leitelement auf, wobei das erste Leitelement durch ein erstes separates Blechelement und das zweite Leitelement durch ein zweites separates Blechelement gebildet ist, die voneinander beabstandet sind.

Durch das erste Leitelement wird insbesondere der direkte bzw. kürzeste Strömungsweg für das Abgas zwischen der Austrittsöffnung und dem Auslass im Auslassraum derart behindert, so dass hier bereits eine Durchmischung des Abgases unterstützt wird. Insbesondere werden unerwünscht kurze Abgasströmungswege bzw. unerwünscht kurze Verweilzeiten des Abgases im Gehäuse durch das erste Leitelement verhindert. Das zweite Leitelement ist insbesondere dazu gebildet, den durch das erste Leitelement abgelenkten Abgasstrom in zumindest zwei Teilströme zu unterteilen und zumindest einen der Teilströme einer weiteren Öffnung zuzuführen. Dabei sind das erste Leitelement und das zweite Leitelement derart zueinander angeordnet, dass zumindest zwei der Teilströme gegenläufig durch die Öffnungen geleitet werden.

Zur besonders einfachen Fertigung und flexiblen Montage wird vorgeschlagen, die Leitelemente durch separate Blechelemente zu bilden. Die Blechelemente haben aber neben der einfachen Verarbeitung zudem den Vorteil, dass sie bei einer geringen Materialstärke eine gute Stabilität aufweisen und somit den geringen Bauraum nicht übermäßig verengen. Bevorzugt sind die Blechelemente durch geeignete Rundungen und Kurven derart geformt, dass Strömungsabrisse und damit Strömungsschattenzonen vermieden werden.

Gemäß einer weiteren vorteilhaften Ausführungsform der Abgasbehandlungseinheit weist die Teilungsvorrichtung zumindest ein erstes Leitelement und ein zweites Leitelement auf, die beidseitig des Auslassraums angeordnet sind. Bevorzugt ist hierbei, dass diese zumindest teilweise parallel zueinander und/oder parallel zur Austrittsöffnung angeordnet sind.

Über das erste Leitelement und das zweite Leitelement werden die zumindest zwei Teilströme durch die Teilungsvorrichtung in den Auslassraum gerichtet geleitet, so dass zumindest zwei der Teilströme gegenläufig aufeinander gerichtet sind. Dabei müssen das erste Leitelement und das zweite Leitelement nicht immer dazu eingerichtet sein, die endgültige Ausrichtung der Teilströme zu bestimmen, sondern es kann ausreichend sein, die Strömung in Teilströme sanft umzuleiten und den Öffnungen zuzuführen. Hierzu ist es besonders vorteilhaft, zumindest eines der Leitelemente parallel zur Austrittsöffnung der Zuleitung anzuordnen, wodurch eine gegendruckarme Umlenkung der Teilströme ermöglicht ist. Insbesondere ist eine Umlenkung um 90°, das heißt in die Ebene, auf die die Strömungsrichtung aus der Austrittsöffnung austretenden Abgases normal ausgerichtet ist. Bereits hierdurch kann eine vorteilhafte Vormischung stattfinden, wobei hier noch keine ausreichende Homogenität erzielt wird.

Durch die Anordnung der Leitelemente beidseitig des Auslassraums ist sichergestellt, dass das Abgas gezielt zu den Öffnungen geleitet wird. Durch die teilweise parallele Anordnung zueinander, und bevorzugt einer Queranordnung der Leitelemente zur Eintrittsrichtung des Abgases durch die Öffnung, wird sichergestellt, dass das Abgas mit (nahezu) gleicher Strömungscharakteristik in den Auslassraum eingeleitet wird, so dass hier eine besonders homogene Durchmischung begünstigt wird. Es ist also besonders bevorzugt, dass die Leitelemente im Bereich des Übergangs zu einer jeweiligen Öffnung parallel zueinander ausgerichtet sind und auch die Öffnungen zueinander parallel ausgerichtet sind. Mit einer solchen Strömungsumlenkung können insbesondere Strömungsabrisse und damit auch der Erzeugung von Strömungsschattenzonen vermieden werden. Strömungsschattenzonen tragen nicht zur Durchmischung bei und verengen den zur Verfügung stehenden Mischraum und erhöhen damit potentiell den Rückstau. Ganz besonders bevorzugt ist die Umleitung so eingerichtet, dass bei einer laminaren Anströmung der laminare Strömungszustand nicht gestört wird, also beibehalten wird. Allerdings strömt das Abgas im Zwischenraum und im Auslassraum bevorzugt turbulent, weil hier neben der diffusiven Vermischung auch eine kinetische Vermischung stattfindet.

Gemäß einer weiteren vorteilhaften Ausführungsform der Abgasbehandlungseinheit weist die Teilungsvorrichtung zumindest ein erstes Leitelement und ein zweites Leitelement auf, wobei das zweite Leitelement einen Leitabschnitt aufweist, welcher sich seitlich der Zuleitung geneigt zur Austrittsöffnung im Zwischenraum erstreckt.

Mit dem Leitabschnitt wird erreicht, dass das Abgas, welches über die Wandung der Zuleitung anströmt, in zwei Teilströme unterteilt wird, wobei durch die Neigung des Leitabschnitts in Bezug auf die Austrittsöffnung eine geführte Umleitung der Abgasströmung erreicht wird. Bei dieser bevorzugten Ausführungsform wird durch das erste Blechelement das Abgas derart umgeleitet, dass zumindest ein großer Teil der Abgasströmung um den Außenumfang der Zuleitung im Zwischenraum herum geführt wird und dort auf den Leitabschnitt trifft, womit die zwei Teilströme unterteilt werden. Hierdurch ist es möglich, einen besonders geringen Gegendruck zu erzeugen und zugleich den Abgasstrom in mehrere gegenläufig gerichtete Teilströme zu unterteilen.

Es sind auch Ausführungsformen möglich, bei denen der Leitabschnitt nicht eine geradlinige Neigung aufweist, sondern zumindest einen Teilstrom in einen geneigten Winkel umleitet. Dazu kann der Leitabschnitt zum Beispiel in einem ersten Anströmbereich parallel zur Anströmrichtung ausgerichtet sein und anschließend bis zur Öffnung mit zumindest einem Wölbungsradius gekrümmt sein, bevorzugt zwei gegenläufigen Wölbungsradien. Es ist also nicht ausgeschlossen, dass der Leitabschnitt auch Bereiche aufweist, die zum Beispiel parallel zur Austrittsöffnung ausgerichtet sind. Maßgeblich ist der Leitabschnitt derart eingerichtet, dass eine sanfte Umleitung beziehungsweise sanfte Teilung ermöglicht ist.

Gemäß einer weiteren vorteilhaften Ausführungsform der Abgasbehandlungseinheit ist die zumindest einen Teil der Öffnung bildende Teilungsvorrichtung einstückig aus dem Gehäuse geformt.

Bei dieser besonders bevorzugten Ausführungsform sind keine zusätzlichen Bauelemente vorgesehen, sondern das Gehäuse selbst bildet die Teilungsvorrichtung, wobei die Leitflächen der Teilungsvorrichtung durch Vertiefungen und Erhebungen in dem Gehäuse gebildet ist. Dies ermöglicht eine besonders einfache Fertigung, die insbesondere für Großserien geeignet ist, weil die Teilungsvorrichtung ohne zusätzliche Fügevorgänge z. B. mit einem Formwerkzeug geformt werden kann. Insbesondere ist es bei dieser Ausführungsform möglich, die Zuleitung einfach in das Gehäuse formschlüssig einzuführen.

Gemäß einer weiteren vorteilhaften Ausführungsform der Abgasbehandlungseinheit sind die Öffnungen einander entgegengesetzt ausgerichtet. Bevorzugt sind die Öffnungen auch versetzt zueinander angeordnet.

Durch die Anordnung der Öffnungen zueinander entgegengesetzt wird eine besonders gute Homogenisierung auf kleinem Raum erreicht. Insbesondere durch eine zueinander versetzte Anordnung der Öffnungen kann eine Wirbelströmung erzeugt werden, die eine Homogenisierung mit besonders geringer Gegendruckwirkung ermöglicht. Ganz besonders bevorzugt sind drei oder vier Teilströme vorgesehen, wobei zwei einander (diametral) gegenläufig ausgerichtet sind und der zumindest eine weiterer Teilstrom quer zu den gegenläufigen Teilströmen ausgerichtet ist. Ganz besonders bevorzugt sind nur zwei Teilströme gegenläufig ausgerichtet und (geringfügig) durch eine Querschnittsverengung beschleunigt, so dass ein Sog entsteht, der weitere Teilströme sanft einmischt. Insbesondere können die zwei gegenläufigen Teilströme dabei den geringeren Volumenanteil aufweisen, so dass der Rückstau aufgrund der Beschleunigung gering bleibt und der Sogeffekt dennoch eine hervorragende (kinetische) Durchmischung der Teilströme erzielt.

Gemäß einer weiteren vorteilhaften Ausführungsform der Abgasbehandlungsvorrichtung ist im Bereich zumindest einer Öffnung zumindest eine Leitfläche vorgesehen, bevorzugt ein Blech, wobei die Leitfläche bevorzugt zumindest teilweise geneigt zu einer Ausströmrichtung der Öffnung angeordnet ist.

Die zumindest eine Leitfläche kann vor und/oder hinter der Öffnung in Strömungsrichtung angeordnet sein. Eine Leitfläche vor der Öffnung sorgt für einen besonders gezielten Übergang in die erwünschte Strömungsrichtung in den Auslassraum, wodurch Stauströmungen und ähnliches vermieden werden. Durch eine Leitfläche hinter der Öffnung können die Strömungen im Auslassraum weiter umgelenkt werden oder erst dort in die erwünschte Strömungsrichtung gelenkt werden. Letztere Anordnung kann insbesondere bei sehr kleinen Anordnungen vorteilhaft sein, wenn hierdurch aus Platzgründen eine sanftere Umlenkung der Abgasteilströme ermöglicht wird.

Die bevorzugte Ausführungsvariante des Leitelements bzw. der Leitfläche aus einem oder mehreren Blechen ermöglicht eine besonders einfache Fertigung. Dabei kann das Blech als separates Element vorgesehen sein oder aber mit einem die Teilungsvorrichtung bildenden Blech einstückig gebildet sein oder aber mit dem Gehäuse einstückig gebildet sein. Hierbei kann das Blech den Zwischenraum von dem Gehäuse bis zur Zuleitung überbrücken oder aber von einer Seite in den Zwischenraum hineinragen.

Gemäß einer weiteren vorteilhaften Ausführungsform der Abgasbehandlungsvorrichtung umfasst die Teilungsvorrichtung zumindest eine Leitfläche, die derart ausgerichtet ist, dass Teilströme frontal oder in einem Winkel aufeinandertreffen.

Durch das Lenken der Teilströme, so dass diese frontal aufeinandertreffen, wird eine besonders starke Durchmischung erreicht, die eine besonders gute Homogenisierung auf kleinstem Raum zur Folge hat. Bei einer Lenkung der Teilströme, so dass sie in einem Winkel aufeinandertreffen, gibt es eine Durchkreuzung der Teilströme, die eine besonders sanfte Durchmischung erreicht, wobei dennoch viele kleine turbulente Wirbel erzeugt werden, die eine gute (kinetische) Durchmischung und Homogenisierung des Abgases bewirken.

Gemäß einem weiteren Aspekt der Erfindung wird ein Kraftfahrzeug mit einer Verbrennungskraftmaschine mit Abgasleitung vorgeschlagen, wobei die Abgasleitung eine hier als erfindungsgemäß oder vorteilhaft beschriebene Abgasbehandlungseinheit umfasst.

Mit Kraftfahrzeugen werden hier insbesondere Lastkraftwagen und Personenkraftwagen bezeichnet, wobei auch Schiffe, Lokomotiven und Flugzeuge damit bezeichnet werden. Die Verbrennungskraftmaschine kann dabei ein Dieselmotor oder ein Ottomotor sein, wobei die Abgasbehandlungseinheit insbesondere für eine mager verbrennende Verbrennungskraftmaschine geeignet ist. Die Abgasleitung ist direkt mit dem Verbrennungsraum, in der Regel einem Zylinder oder Hubraum, verbunden, und umfasst dabei den sogenannten Abgaskrümmer. In der Abgasleitung wird das Abgas (katalytisch) behandelt, der Schall gedämpft und das Abgas gekühlt und so abgasnormkonform in die Umgebung freigegeben. Bei diesem Prozess soll möglichst wenig Gegendruck erzeugt werden, damit die Verbrennungskraftmaschine eine möglichst hohe Leistung erzielen kann. Die hier vorgeschlagene Abgasbehandlungseinheit eignet sich insbesondere für den Einsatz bei kleinem Bauraum, und ganz bevorzugt im Bereich des Abgaskrümmers. Gerade bei mager verbrennenden Verbrennungskraftmaschinen ist die Abgasbehandlung aufgrund der niedrigen Abgastemperaturen erschwert, so dass eine möglichst motornahe Anordnung erwünscht ist. Mit der hier vorgeschlagenen Abgasbehandlungseinheit kann ein Abgasbehandlungskörper sehr nahe und insbesondere unter 50 cm, besonders bevorzugt unter 20 cm, Abstand zum Auslass der Verbrennungskammer angeordnet werden, ohne räumlich mit andere Komponenten im Motorraum zu konkurrieren; denn die Abmessung der Abgasbehandlungseinheit ist kaum größer als die des Abgaskrümmers. Besonders bevorzugt ist zwischen dem Auslass der Verbrennungskammer und der Abgasbehandlungseinheit kein Turbolader angeordnet, sondern ein benötigter Turbolader ist der Abgasbehandlungseinheit in Ausstoßrichtung nachgeschaltet. Gerade der Turbolader verursacht eine starke Abgasabkühlung und daher ist insbesondere für die Umsetzung von Stickoxiden eine Anordnung nah an der Verbrennungskammer besonders effizient. Zugleich verursacht die hier vorgeschlagene Abgasbehandlungseinheit einen besonders geringen Gegendruck bei gleichzeitig guter Vermischung und Homogenisierung, insbesondere bei der Einspritzung eines Reduktionsmittels für die selektive katalytische Reaktion zur Verringerung der Stickoxide im Abgas aufgrund der mageren Verbrennung.

Die in den Ansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine Abgasbehandlungseinheit mit zwei Blechelementen,
- Fig. 2:: eine Zuleitung mit Teilungsvorrichtung,
- Fig. 3:: eine Abgasbehandlungseinheit mit angeschlossenem nachfolgendem Abgasbehandlungskörper,
- Fig. 4:: ein Gehäuse, bei dem die Teilungsvorrichtung der Abgasbehandlungseinheit einstückig mit dem Gehäuse ausgebildet ist,
- Fig. 5:: eine weitere Ansicht des Gehäuses wie in Fig. 4,
- Fig. 6:: ein schematisches Kraftfahrzeug mit Verbrennungskraftmaschine und Abgasleitung.

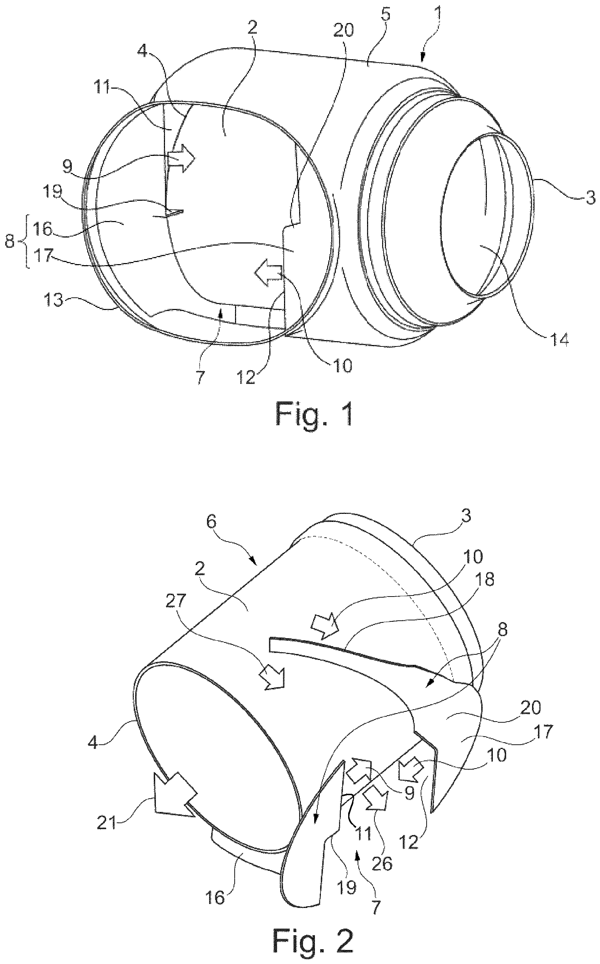

In Fig. 1 ist eine Abgasbehandlungseinheit 1 gezeigt, bei der eine Teilungsvorrichtung 8 aus einem ersten Leitelement 16 und einem zweiten Leitelement 17 gebildet ist, die als separate Blechteile im Gehäuse 5 der Abgasbehandlungseinheit 1 an der Zuleitung 2 angeordnet sind. In der Zuleitung 2 befindet sich ein erster Abgasbehandlungskörper 14, von dem durch die Eintrittsöffnung 3 (in dieser Darstellung rechts) das Abgas einströmt und an der Austrittsöffnung 4 (in dieser Darstellung links) das Abgas wieder austritt. Durch das erste Leitelement 16 kann das ausströmende Abgas aus der Austrittsöffnung 4 nicht direkt in den Auslassraum 7 strömen, sondern wird teilweise über die Zuleitung 2 geführt und durch die erste Öffnung 11 und die zweite Öffnung 12 als erster Teilstrom 9 und zweiter Teilstrom 10 in den Auslassraum 7 geleitet. Zur Ausrichtung der Teilströme 9, 10 sind zudem eine erste Leitfläche 19 an der ersten Öffnung 11 und eine zweite Leitfläche 20 an der zweiten Öffnung 12 vorgesehen. An den Auslassraum 7 schließt sich die Einlassöffnung 13 unmittelbar an.

In Fig. 2 ist allein die Zuleitung 2 mit dem ersten Leitelement 16 und dem zweiten Leitelement 17 in einer anderen Ansicht gezeigt, wie sie in Fig. 1 dargestellt ist. Hierbei ist zu erkennen, wie das Abgas durch die Eintrittsöffnung 3 in die Zuleitung 2 einströmt und aus der Austrittsöffnung 4 in Ausströmrichtung 21 in den (hier aufgrund des nicht dargestellten Gehäuses 5 nicht umgrenzten) Zwischenraum 6 einströmt. Durch das erste Leitelement 16 wird zumindest ein Teil des Abgases um die Zuleitung 2 gelenkt, und von dort kommend durch den Leitabschnitt 18 des zweiten Leitelements 17 in weitere Teilströme unterteilt. Hierbei liegt der Leitabschnitt 18 geneigt zur Austrittsöffnung 4, ungefähr 45°. In den auch nicht klar umgrenzten Auslassraum 7 werden über das erste Leitelement 16 und das zweite Leitelement 17 insbesondere über den Leitabschnitt 18 ein (leicht) beschleunigter erster Teilstrom 9 (von im Bild rechts) zugegeben, ein (leicht) beschleunigter zweiter Teilstrom 10 (von im Bild links) über die erste Öffnung 11 und die zweite Öffnung 12 und geleitet über die erste Leitfläche 19 bzw. zweite Leitfläche 20 hinzugegeben. Weiterhin wird ein dritter Teilstrom 26 (von im Bild unten) und ein vierter Teilstrom 27 (von im Bild oben) durch die beschleunigten ersten Teilstrom 9 und zweiten Teilstrom 10 (quer) angesaugt.

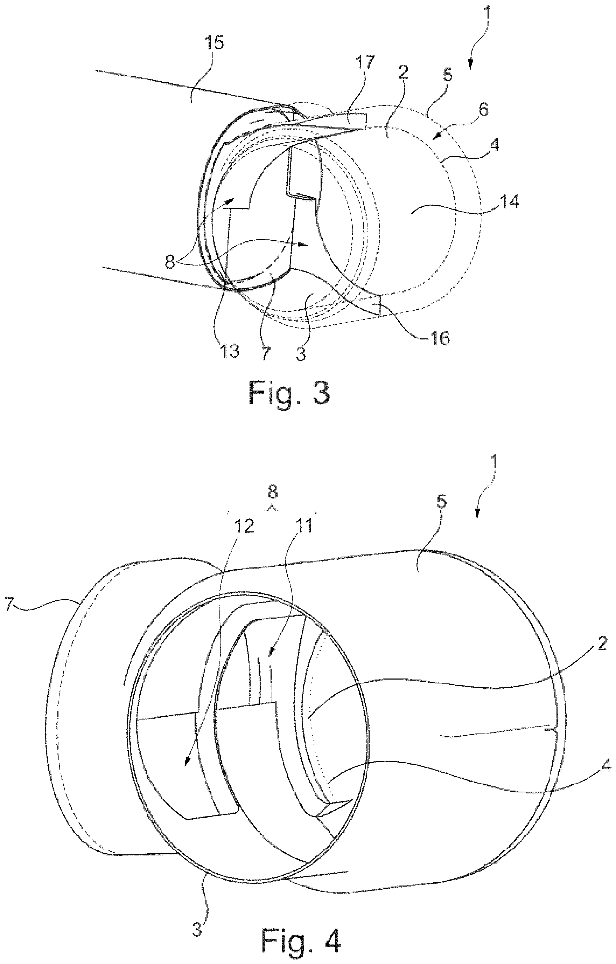

In Fig. 3 ist ein Aufbau einer Abgasbehandlungseinheit 1 wie in Fig. 1 gezeigt, wobei sich hier an den Auslassraum 7 ein zweiter Abgasbehandlungskörper 15 mit seiner Einlassöffnung 13 anschließt. In dieser Ansicht ist gut zu erkennen, dass sich der Zwischenraum 6 zwischen dem Gehäuse 5 und der Zuleitung 2 bildet, während der Auslassraum 7 durch die Teilungsvorrichtung 8 und die Einlassöffnung 13 begrenzt wird.

In Fig. 4 ist eine Abgasbehandlungseinheit 1 gezeigt, wobei hier die Zuleitung 2 nur durch die gepunktete Linie der Eintrittsöffnung 3 und Austrittsöffnung 4 angedeutet ist. Hierbei bildet das Gehäuse 5 der Abgasbehandlungseinheit 1 die Teilungsvorrichtung 8 einstückig aus, wobei hier Kanäle gebildet sind, die in einer ersten Öffnung 11 und einer zweiten Öffnung 12 in den Auslassraum 7 grenzen.

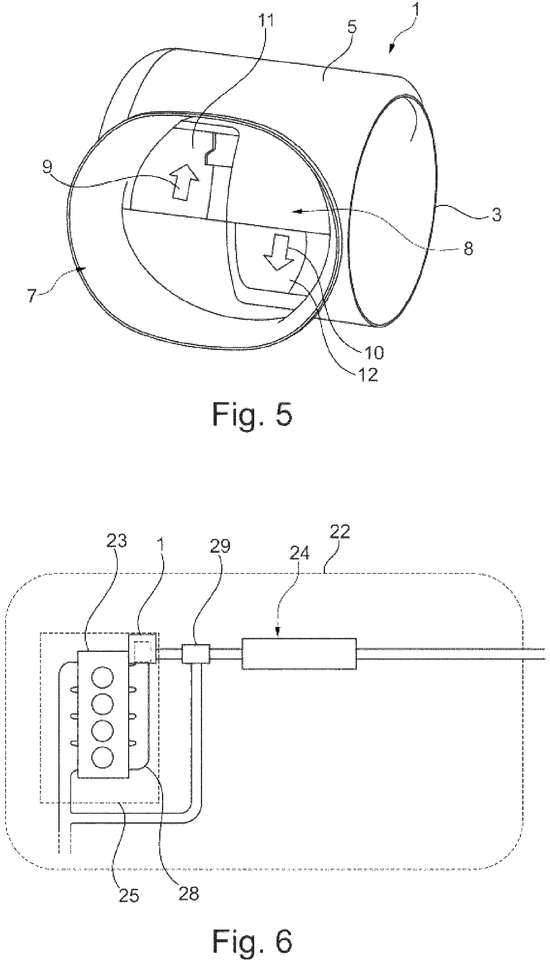

In Fig. 5 ist eine andere Perspektive der Abgasbehandlungseinheit 1 wie in Fig. 4 gezeigt, wobei hier die erste Öffnung 11 und die zweite Öffnung 12 in dem Gehäuse 5 gut zu erkennen sind. Bei dieser Variante sind der erste Teilstrom 9 und der zweite Teilstrom 10 gegenläufig in Umfangsrichtung der Zuleitung ausgerichtet.

In Fig. 6 ist schematisch ein Kraftfahrzeug 22 dargestellt, welches eine Verbrennungskraftmaschine 23 aufweist, an die eine Abgasleitung 24 angeschlossen ist, welche eine Abgasbehandlungseinheit 1 wie z. B. in den vorangehenden Figuren umfasst. In diesem bevorzugten Beispiel ist die Abgasbehandlungseinheit 1 direkt an den Abgaskrümmer 28 angeschlossen und befindet sich im Motorraum 25, so dass die Temperatur hier besonders hoch ist und auch bei einer mager betriebenen Verbrennungskraftmaschine 23 eine gute Umsetzung, insbesondere von Stickoxiden, ermöglicht ist. Unterstützt wird dieser Effekt dadurch, dass der Turbolader 29 in Ausstoßrichtung hinter der Abgasbehandlungseinheit 1 angeordnet ist und damit die Temperatur erst hinter dem Turbolader 29 in der Abgasleitung 24 (deutlich) abfällt.

Vorsorglich sei noch darauf hingewiesen, dass die in den Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

Mit der hier vorgeschlagenen Abgasbehandlungseinheit ist es möglich, auf kleinem Bauraum eine gute Durchmischung und Homogenisierung des Abgases zu erreichen, insbesondere wenn ein Reduktionsmittel eingespritzt wird, ohne dass dabei ein übermäßiger Staudruck erzeugt wird.

### Bezugszeichenliste

- 1: Abgasbehandlungseinheit
- 2: Zuleitung
- 3: Eintrittsöffnung
- 4: Austrittsöffnung
- 5: Gehäuse
- 6: Zwischenraum
- 7: Auslassraum
- 8: Teilungsvorrichtung
- 9: erster Teilstrom
- 10: zweiter Teilstrom
- 11: erste Öffnung
- 12: zweite Öffnung
- 13: Einlassöffnung
- 14: erster Abgasbehandlungskörper
- 15: zweiter Abgasbehandlungskörper
- 16: erstes Leitelement
- 17: zweites Leitelement
- 18: Leitabschnitt
- 19: erste Leitfläche
- 20: zweite Leitfläche
- 21: Ausströmrichtung
- 22: Kraftfahrzeug
- 23: Verbrennungskraftmaschine
- 24: Abgasleitung
- 25: Motorraum
- 26: dritter Teilstrom
- 27: vierter Teilstrom
- 28: Abgaskrümmer
- 29: Turbolader

## Patentansprüche

1. Abgasbehandlungseinheit (1), zumindest aufweisend:
- eine Zuleitung (2) für Abgas mit einer Eintrittsöffnung (3) und mit einer Austrittsöffnung (4) und einem strömungstechnisch zwischen Eintrittsöffnung (3) und Austrittsöffnung (4) angeordneten Abgasbehandlungskörper (14);
- ein Gehäuse (5), in welches sich die Zuleitung (2) mit der Austrittsöffnung (4) hinein erstreckt und welches zumindest um die Zuleitung (2) herum einen Zwischenraum (6) ausbildet;
- einen Auslassraum (7) in dem Gehäuse (5), welcher seitlich zu der Zuleitung (2) derart angeordnet ist, dass ein nicht geradliniger Strömungsweg von der Austrittsöffnung (4) der Zuleitung (2) zum Auslassraum (7) mit zumindest einer Strömungsumkehr gebildet ist,
**dadurch gekennzeichnet, dass** weiter eine Leitelemente aufweisende Teilungsvorrichtung (8) zwischen dem Zwischenraum (6) und dem Auslassraum (7) vorgesehen ist, die derart eingerichtet ist, dass das aus dem Zwischen-raum (6) kommende Abgas in zumindest zwei Teilströme (9, 10) unterteilt wird, die zum Auslassraum (7) hin über zumindest zwei mit der Teilungsvorrichtung (8) gebildete Öffnungen (11, 12) gegenläufig in den Auslassraum (7) leitbar sind.

2. Abgasbehandlungseinheit (1) nach Anspruch 1, wobei sich an den Auslassraum (7) eine Einlassöffnung (13) eines zweiten Abgasbehandlungskörpers (15) anschließt.

3. Abgasbehandlungseinheit (1) nach Anspruch 1 oder 2, wobei die Teilungsvorrichtung (8) zumindest ein erstes Leitelement (16) und ein zweites Leitelement (17) aufweist, wobei das erste Leitelement (16) durch ein erstes separates Blechelement und das zweite Leitelement (17) durch ein zweites separates Blechelement gebildet ist, die voneinander beabstandet sind.

4. Abgasbehandlungseinheit (1) nach einem der vorhergehenden Ansprüche, wobei die Teilungsvorrichtung (8) zumindest ein erstes Leitelement (16) und ein zweites Leitelement (17) aufweist, die beidseitig des Auslassraums (7) angeordnet sind.

5. Abgasbehandlungseinheit (1) nach einem der vorhergehenden Ansprüche, wobei die Teilungsvorrichtung (8) zumindest ein erstes Leitelement (16) und ein zweites Leitelement (17) aufweist, wobei das zweite Leitelement (17) einen Leitabschnitt (18) aufweist, welcher sich seitlich der Zuleitung (2) geneigt zur Austrittsöffnung (4) im Zwischenraum (6) erstreckt.

6. Abgasbehandlungseinheit (1) nach einem der vorhergehenden Ansprüche, wobei die zumindest einen Teil der Öffnungen (11, 12) bildende Teilungsvorrichtung (8) einstückig aus dem Gehäuse (5) geformt ist.

7. Abgasbehandlungseinheit (1) nach einem der vorhergehenden Ansprüche, wobei die Öffnungen (11, 12) einander entgegengesetzt ausgerichtet sind.

8. Abgasbehandlungseinheit (1) nach einem der vorhergehenden Ansprüche, wobei im Bereich zumindest einer Öffnung (11, 12) zumindest eine Leitfläche (19, 20) vorgesehen ist, wobei die Leitfläche (19, 20) zumindest teilweise geneigt zu einer Auströmrichtung (21) der Öffnung (11, 12) angeordnet ist.

9. Abgasbehandlungseinheit (1) nach einem der vorhergehenden Ansprüche, wobei die Teilungsvorrichtung (8) zumindest eine Leitfläche (19, 20) umfasst, die derart ausgerichtet ist, dass Teilströme (9, 10) frontal oder in einem Winkel aufeinandertreffen.

10. Kraftfahrzeug (22) mit einer Verbrennungskraftmaschine (23) mit Abgasleitung (24), wobei die Abgasleitung (24) eine Abgasbehandlungseinheit (1) nach einem der vorhergehenden Ansprüche umfasst.

## Claims

1. Exhaust-gas treatment unit (1), at least having:
- a supply line (2) for exhaust gas, having an entry opening (3) and having an exit opening (4) and having an exhaust-gas treatment body (14) arranged in terms of flow between the entry opening (3) and exit opening (4);
- a housing (5) into which the supply line (2) extends by way of the exit opening (4) and which forms an intermediate space (6) at least around the supply line (2) ;
- an outlet space (7) in the housing (5), which outlet space is arranged laterally with respect to the supply line (2) such that a non-rectilinear flow path, with at least one flow reversal, is formed from the exit opening (4) of the supply line (2) to the outlet space (7),
**characterized in that** furthermore, a dividing device (8) having guide elements is provided between the intermediate space (6) and the outlet space (7), which intermediate space is designed such that Exhaust gas passing out of the intermediate space (6) is divided into at least two partial streams (9, 10) which, in the direction of the outlet space (7), can be conducted into the outlet space (7) in opposite directions by way of at least two openings (11, 12) that are formed by way of the dividing device (8) .

2. Exhaust-gas treatment unit (1) according to Claim 1, wherein the outlet space (7) is adjoined by an inlet opening (13) of a second exhaust-gas treatment body (15).

3. Exhaust-gas treatment unit (1) according to Claim 1 or 2, wherein the dividing device (8) has at least one first guide element (16) and one second guide element (17), wherein the first guide element (16) is formed by a first separate sheet-metal element and the second guide element (17) is formed by a second separate sheet-metal element, which sheet-metal elements are spaced apart from one another.

4. Exhaust-gas treatment unit (1) according to one of the preceding claims, wherein the dividing device (8) has at least one first guide element (16) and one second guide element (17) which are arranged to both sides of the outlet space (7).

5. Exhaust-gas treatment unit (1) according to one of the preceding claims, wherein the dividing device (8) has at least one first guide element (16) and one second guide element (17), wherein the second guide element (17) has a guide section (18) which extends in the intermediate space (6) laterally with respect to the supply line (2) and so as to be inclined relative to the exit opening (4).

6. Exhaust-gas treatment unit (1) according to one of the preceding claims, wherein the dividing device (8), which forms at least a part of the openings (11, 12), is formed from the housing (5) in unipartite fashion.

7. Exhaust-gas treatment unit (1) according to one of the preceding claims, wherein the openings (11, 12) are oriented oppositely to one another.

8. Exhaust-gas treatment unit (1) according to one of the preceding claims, wherein at least one guide surface (19, 20) is provided in the region of at least one opening (11, 12), wherein the guide surface (19, 20) is arranged so as to be at least partially inclined relative to an outflow direction (21) of the opening (11, 12).

9. Exhaust-gas treatment unit (1) according to one of the preceding claims, wherein the dividing device (8) comprises at least one guide surface (19, 20) which is oriented such that partial streams (9, 10) strike one another frontally or at an angle.

10. Motor vehicle (22) having an internal combustion engine (23) with exhaust line (24), wherein the exhaust line (24) comprises an exhaust-gas treatment unit (1) according to one of the preceding claims.

## Revendications

1. Unité de traitement des gaz d'échappement (1), présentant au moins:
- une conduite d'arrivée (2) pour les gaz d'échappement avec une ouverture d'entrée (3) et avec une ouverture de sortie (4) et un corps de traitement des gaz d'échappement (14) disposé en position d'écoulement entre l'ouverture d'entrée (3) et l'ouverture de sortie (4);
- un boîtier (5), à l'intérieur duquel la conduite d'arrivée (2) s'étend avec l'ouverture de sortie (4) et qui forme une chambre intermédiaire (6) au moins autour de la conduite d'arrivée (2) ;
- une chambre d'échappement (7) dans le boîtier (5), qui est disposée latéralement à la conduite d'arrivée (2), de telle manière qu'un chemin d'écoulement non rectiligne avec au moins une inversion d'écoulement soit formé de l'ouverture de sortie (4) de la conduite d'arrivée (2) à la chambre d'échappement (7),
**caractérisée en ce qu'**il est en outre prévu un dispositif de division (8) présentant des éléments de guidage entre la chambre intermédiaire (6) et la chambre d'échappement (7), qui est configuré de telle manière que les gaz d'échappement provenant de la chambre intermédiaire (6) soient divisés en au moins deux courants partiels (9, 10), qui peuvent être conduits vers la chambre d'échappement (7) par au moins deux ouvertures (11, 12) formées avec le dispositif de division (8) en sens contraire dans la chambre d'échappement (7).

2. Unité de traitement des gaz d'échappement (1) selon la revendication 1, dans laquelle une ouverture d'admission (13) d'un deuxième corps de traitement des gaz d'échappement (15) se raccorde à la chambre d'échappement (7).

3. Unité de traitement des gaz d'échappement (1) selon la revendication 1 ou 2, dans laquelle le dispositif de division (8) présente au moins un premier élément de guidage (16) et un deuxième élément de guidage (17), dans lequel le premier élément de guidage (16) est formé par un premier élément de tôle distinct et le deuxième élément de guidage (17) est formé par un deuxième élément de tôle distinct, qui sont espacés l'un de l'autre.

4. Unité de traitement des gaz d'échappement (1) selon l'une quelconque des revendications précédentes, dans laquelle le dispositif de division (8) présente au moins un premier élément de guidage (16) et un deuxième élément de guidage (17), qui sont disposés de part et d'autre de la chambre d'échappement (7).

5. Unité de traitement des gaz d'échappement (1) selon l'une quelconque des revendications précédentes, dans laquelle le dispositif de division (8) présente au moins un premier élément de guidage (16) et un deuxième élément de guidage (17), dans laquelle le deuxième élément de guidage (17) présente une partie de guidage (18), qui s'étend latéralement à la conduite d'arrivée (2) de façon inclinée par rapport à l'ouverture de sortie (4) dans la chambre intermédiaire (6).

6. Unité de traitement des gaz d'échappement (1) selon l'une quelconque des revendications précédentes, dans laquelle le dispositif de division (8) formant au moins une partie des ouvertures (11, 12) est formé d'une pièce avec le boîtier (5).

7. Unité de traitement des gaz d'échappement (1) selon l'une quelconque des revendications précédentes, dans laquelle les ouvertures (11, 12) sont orientées en opposition l'une à l'autre.

8. Unité de traitement des gaz d'échappement (1) selon l'une quelconque des revendications précédentes, dans laquelle il est prévu au moins une face de guidage (19, 20) dans la région d'au moins une ouverture (11, 12), dans laquelle la face de guidage (19, 20) est disposée en position au moins partiellement inclinée par rapport à une direction de sortie (21) de l'ouverture (11, 12) .

9. Unité de traitement des gaz d'échappement (1) selon l'une quelconque des revendications précédentes, dans laquelle le dispositif de division (8) comprend au moins une face de guidage (19, 20), qui est orientée de telle manière que des courants partiels (9, 10) se rencontrent frontalement ou sous un certain angle.

10. Véhicule automobile (22) équipé d'un moteur à combustion interne (23) avec une conduite des gaz d'échappement (24), dans lequel la conduite des gaz d'échappement (24) comprend une unité de traitement des gaz d'échappement (1) selon l'une quelconque des revendications précédentes.
